# EUROPEAN PATENT APPLICATION

(11) **EP 4 564 982 A1**
(43) Date of publication of application: **04.06.2025**
(21) Application number: 22952565.4
(22) Date of filing: 29.07.2022
(51) Int. Cl.: H04W 74/08

(54) **ACCESS METHOD AND APPARATUS, STORAGE MEDIUM, AND CHIP**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/109243
(87) International publication number: WO 2024/021119

(57) **Abstract**

The present invention relates to an access method and apparatus, a storage medium, and a chip. The method comprises: a terminal device can determine a first parameter corresponding to at least one candidate access point, determine, according to the first parameter, a target timing advance (TA) used for accessing a target access point, and access the target access point according to the target TA, wherein the candidate access points may comprise the target access point, and the access points may comprise cells and/or beams. Thus, a terminal device can determine a target TA according to a first parameter, and access a target access point according to the target TA, thereby saving the time for determining the target TA by means of a random access procedure, reducing handover delay, and improving the data transmission efficiency in a handover process.

## Description

### FIELD

The present invention relates to the field of communication technology, and more particularly to an access method and apparatus, a storage medium and a chip.

### BACKGROUND

During a handover process of a wireless communication system, a network device may send a handover command to a terminal in response to a measurement report result sent by the terminal, and the handover command may carry configuration information of a target cell. After the terminal receives the handover command, the terminal can synchronize with the target cell, and then initiate a random access process (via a random access channel, RACH) to access the target cell. Through the random access process, the terminal can acquire a timing advance (TA) of the target cell, and send a reconfiguration completion message to the target cell according to the TA to complete the handover.

In the related art, the handover process of the terminal has a large delay, which will reduce the data transmission efficiency during the handover process.

### SUMMARY

In order to overcome the above problems existing in related art, the present invention provides an access method and apparatus, a storage medium and a chip.

According to a first aspect of embodiments of the present invention, there is provided an access method, which includes:
determining a first parameter corresponding to at least one candidate access point; where the at least one candidate access point includes a target access point, and an access point is a cell and/or a beam;
determining a target timing advance (TA) for accessing the target access point according to the first parameter; and
accessing the target access point according to the target TA.

According to a second aspect of embodiments of the present invention, there is provided an access method, which includes:
determining a first parameter corresponding to at least one candidate access point; where the at least one candidate access point includes a target access point; and
sending a first message to a terminal according to the first parameter. The first message includes the first parameter; the first parameter is configured to instruct the terminal to determine a target timing advance (TA) for accessing the target access point in a case where the terminal is to access the target access point, and access the target access point according to the target TA; and an access point is a cell and/or a beam.

According to a third aspect of embodiments of the present invention, there is provided an access apparatus, which is applied to a terminal and includes:
a first determining module, configured to determine a first parameter corresponding to at least one candidate access point; where the at least one candidate access point includes a target access point, and an access point is a cell and/or a beam;
a second determining module, configured to determine a target timing advance (TA) for accessing the target access point according to the first parameter; and
an accessing module, configured to access the target access point according to the target TA.

According to a fourth aspect of embodiments of the present invention, there is provided an access apparatus, which is applied to a network device and includes:
a third determining module, configured to determine a first parameter corresponding to at least one candidate access point; where the at least one candidate access point includes a target access point; and
a first sending module, configured to send a first message to a terminal according to the first parameter; where the first message includes the first parameter; the first parameter is configured to instruct the terminal to determine a target timing advance (TA) for accessing the target access point in a case where the terminal is to access the target access point, and access the target access point according to the target TA; where an access point is a cell and/or a beam.

According to a fifth aspect of embodiments of the present invention, there is provided an access apparatus, which includes:
a processor; and
a memory, for storing instructions executable by the processor;
the processor is configured to perform the steps of the access method as provided in the first aspect of the present invention.

According to a sixth aspect of embodiments of the present invention, there is provided an access apparatus, which includes:
a processor; and
a memory, for storing instructions executable by the processor;
the processor is configured to perform the steps of the access method as provided in the second aspect of the present invention.

According to a seventh aspect of embodiments of the present invention, there is provided a computer-readable storage medium, having stored therein computer program instructions that, when executed by a processor, cause the steps of the access method as provided in the first aspect of the present invention to be performed.

According to an eighth aspect of embodiments of the present invention, there is provided a computer-readable storage medium, having stored therein computer program instructions that, when executed by a processor, cause the steps of the access method as provided in the second aspect of the present invention to be performed.

According to a ninth aspect of embodiments of the present invention, there is provided a chip, which includes a processor and an interface; and the processor is configured to read instructions to perform the steps of the access method as provided in the first aspect of the present invention.

According to a tenth aspect of embodiments of the present invention, there is provided a chip, which includes a processor and an interface; and the processor is configured to read instructions to perform the steps of the access method as provided in the second aspect of the present invention.

The technical solutions according to embodiments of the present invention may include the following beneficial effects: the terminal is able to determine the first parameter corresponding to at least one candidate access point, determine the target timing advance (TA) for accessing the target access point according to the first parameter, and access the target access point according to the target TA. The at least one candidate access point may include the target access point, and the access point may include a cell and/or a beam. In this way, the terminal is able to determine the target TA according to the first parameter, and access the target access point according to the target TA, thereby saving the time for determining the target TA through the random access process, reducing the handover delay, and improving the data transmission efficiency during the handover process.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of the present invention, illustrate embodiments consistent with the present invention and, together with the description, serve to explain the principles of the present invention.
FIG. 1 shows a schematic diagram of a communication system according to an example embodiment.
FIG. 2 shows a schematic flowchart of an access method according to an example embodiment.
FIG. 3 shows a schematic flowchart of an access method according to an example embodiment.
FIG. 4 shows a schematic flowchart of an access method according to an example embodiment.
FIG. 5 shows a schematic flowchart of an access method according to an example embodiment.
FIG. 6 shows a schematic flowchart of a method for determining a first parameter by a network device according to an example embodiment.
FIG. 7 shows a schematic flowchart of an access method according to an example embodiment.
FIG. 8 shows a schematic flowchart of an access method according to an example embodiment.
FIG. 9 shows a schematic block diagram of an access apparatus according to an example embodiment.
FIG. 10 shows a schematic block diagram of an access apparatus according to an example embodiment.
FIG. 11 shows a schematic block diagram of an access apparatus according to an example embodiment.
FIG. 12 shows a schematic block diagram of an access apparatus according to an example embodiment.
FIG. 13 shows a schematic block diagram of an access apparatus according to an example embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present invention. Instead, they are merely examples of apparatuses and methods consistent with some aspects of the present invention as recited in the appended claims.

It should be noted that all actions to obtain signals, information or data in the present invention are performed under the premise of complying with respective data protection regulations and policies of a country where they occurs, and with authorization from the owners of respective apparatuses.

In the description of the present invention, terms such as "first", "second" and the like are used to distinguish similar objects and do not necessarily mean a specific order or sequence. In addition, in the description with reference to the drawings, the same reference numerals in different drawings represent the same elements, unless otherwise specified.

In the description of the present invention, unless otherwise stated, the phrase "a plurality of" refers to two or more, and other quantifiers are similar thereto; "at least one", "one or more" or similar expressions refer to any combination of these items, including any combination of single item or plural items. For example, at least one *a* can represent any number of *a*; for another example, one or more of *a, b* or *c* may represent: *a, b, c, a-b, a-c, b-c,* or *a-b-c,* where *a, b, c* may be singular or plural in number; "and/or" describes an association relationship of associated objects, indicating that there may exist three relationships, for example, *A* and/or *B* can mean: *A* alone, both *A* and *B,* and *B* alone, where *A* and *B* may be singular or plural.

Although operations or steps in some embodiments of the present invention are described in a specific order in the drawings, it should not be construed as requiring these operations or steps to be performed in the specific order or serial order shown, nor should it be construed as requiring all operations or steps shown to be performed to obtain a desired result. In embodiments of the present invention, these operations or steps may be performed in series or in parallel; or a part of these operations or steps may be performed.

Environments for implementing embodiments of the present invention will be introduced first below.

The technical solutions according to embodiments of the present invention may be applied to various communication systems. The communication systems may include one or more of: a 4th generation (4G) communication system, a 5th generation (5G) communication system, or other future wireless communication systems (such as 6G). The communication systems may also include one or more of: a public land mobile network (PLMN) network, a Device-to-Device (D2D) communication system, a Machine to Machine (M2M) communication system, an Internet of Things (IoT) communication system, a Vehicle-to-Everything (V2X) communication system or other communication systems.

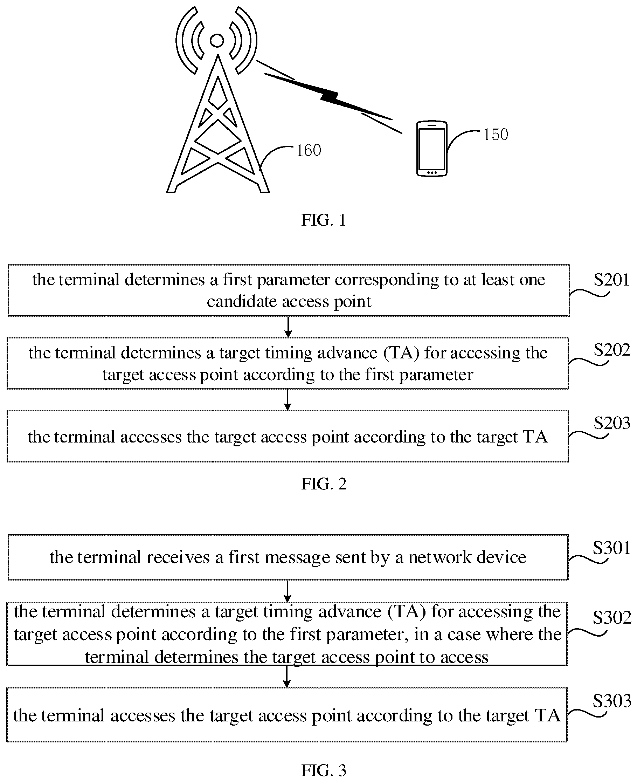

FIG. 1 shows a schematic diagram of a communication system according to an example embodiment. As shown in FIG. 1, the communication system may include a terminal 150 and a network device 160. The communication system may be used to support a 4G network access technology, such as a long term evolution (LTE) access technology, a 5G network access technology, such as a new radio access technology (new RAT), or other future wireless communication technologies. It should be noted that in this communication system, the number of the network devices may be one or more, and the number of the terminals may also be one or more. The number of network devices and the number of terminals in the communication system shown in FIG. 1 are only an example for illustration, which are not limited in the present invention.

The network device in FIG. 1 may be used to support access of the terminal. For example, the network device may be an evolutional Node B (eNB or eNodeB) in LTE; the network device may also be a next-generation Node B (gNB or gNodeB) in the 5G network; the network device may also be an NG radio access network (NG-RAN) device in the 5G network; the network device may also be a base station in a future evolved public land mobile network (PLMN), a broadband network gateway (BNG), an aggregation switch, a non-3rd generation partnership project (non-3GPP) access device or the like. Optionally, the network device in embodiments of the present invention may include various forms of base stations, such as: a macro base station, a micro base station (also called a small station), a relay station, an access point, a 5G base station or a future base station, a satellite, a transmitting and receiving point (TRP), a transmitting point (TP), a mobile switching center, or a device that plays the function of the base station in communications like Device-to-Device (D2D), Machine-to-Machine (M2M), Internet of Things (IoT), Vehicle-to-Everything (V2X), or other communications, which is not specifically limited in embodiments of the present invention. For convenience of description, in all embodiments of the present invention, devices that provide a wireless communication function for the terminal are collectively referred to as the network device or base station.

The terminal in FIG. 1 may be an electronic device that provides voice or data connectivity. For example, the terminal may also be called a user equipment (UE), a subscriber unit, a mobile station, a station, a terminal device, etc. For example, the terminal may include a smartphone, a smart wearable device, a smart speaker, a smart tablet, a wireless modem, a wireless local loop (WLL) station, a personal digital assistant (PDA), or a customer premise equipment (CPE, also called a customer terminal), etc. With the development of the wireless communication technology, devices that can access a communication system, can communicate with a network device in a communication system or can communicate with other objects through a communication system, or devices that can communicate directly with each other, all may be regarded as the terminals in embodiments of the present invention, such as terminals and cars in smart transportation, household appliances in smart home, electrical meter reading instruments, voltage monitoring instruments or environmental monitoring instruments in smart grid, video monitoring instruments in intelligent safety networks, or cash registers, etc. In embodiments of the present invention, the terminal can communicate with the network device. The terminal may be static and fixed, or may be movable, which is not limited in the present invention.

In some embodiments, the above network device may include at least one base station, and each base station may include at least one cell. Further, each cell may include at least one beam. For example, some or all of the cells covered by the network device may be cells that support beamforming, and each cell may be configured with one or more beams.

The above communication system supports movability handover of the terminal. For example, the terminal can carry out handover between two beams, between two cells, or between two base stations. In the handover process of the wireless communication system, the network device may send a handover command to the terminal in response to a measurement report result sent by the terminal, and the handover command may carry configuration information of a target cell. After the terminal receives the handover command, the terminal can synchronize with the target cell, and then initiate a random access process (via a random access channel, RACH) to access the target cell. Through the random access process, the terminal can obtain a timing advance (TA) of the target cell and send a reconfiguration completion message to the target cell according to the TA to complete the handover.

In some embodiments, the network device may indicate the TA for the terminal to access the target cell in the handover command. In this way, the terminal can directly send the reconfiguration completion message to the target cell, without performing the random access process, i.e., skipping the RACH, so that the handover delay is reduced, and the data transmission efficiency is improved.

In some embodiments, in order to improve the robustness of the handover, the terminal can perform conditional handover (CHO). In the conditional handover process, the network device can configure a CHO handover command for the terminal in advance, including handover target cell configuration and a handover trigger condition, where the handover target cell configuration may be a configuration parameter provided by the target cell. The terminal can store the CHO handover command received from the network device, perform a radio resource management (RRM) measurement, and determine whether the handover trigger condition indicated in the CHO handover command is met. When the handover trigger condition is met, the terminal can perform the handover on its own, which can avoid the wireless link failure caused by the base station sending the handover command too late.

It should be noted that when the terminal is to switch to a target cell, because different cells or beams use different TAs, in the conditional handover process, the network device does not know when to perform the handover, and because the TA may be different for the handover of the terminal at different positions or times, it is impossible to indicate the TA of the target cell in the CHO command. As a result, the terminal cannot skip the RACH stage in the conditional handover process, so the handover delay is still large.

In order to solve the above problems, the present invention provides an access method and apparatus, a storage medium and a chip.

FIG. 2 shows a schematic flowchart of an access method according to an example embodiment. The method may be performed by the terminal in the above communication system. As shown in FIG. 2, the method may include the following actions.

In S201, the terminal determines a first parameter corresponding to at least one candidate access point.

The at least one candidate access point may include a target access point, and an access point may be one or more of a cell and/or a beam. For example, in a possible embodiment, the terminal may determine a first parameter corresponding to at least one candidate cell, and the at least one candidate cell may include a target cell; in another possible embodiment, the terminal may determine a first parameter corresponding to at least one candidate beam, and the at least one candidate beam may include a target beam; in another possible embodiment, the terminal may determine a first parameter corresponding to at least one candidate cell and candidate beam. The first parameter corresponding to the target access point may indicate a timing advance (TA) for the terminal to access the target access point.

In some embodiments, the first parameter may be a parameter preset by the terminal.

In some other embodiments, the first parameter may be a parameter configured by a network device. For example, the network device sends configuration to the terminal to configure a corresponding parameter to the terminal.

The terminal may, in response to receiving a first message sent by the network device, acquire the first parameter according to the first message. That is, the network device may send the first message to the terminal, and the first message includes the first parameter.

In S202, the terminal determines a target timing advance (TA) for accessing the target access point according to the first parameter.

It should be noted that the terminal may determine whether to access the target access point according to a preset condition. The preset condition may include a handover condition, a radio resource control (RRC) reconstruction condition or other conditions; and the ways for the terminal to access the target access point may include handover-based access, RRC reconstruction-based access or direct access, which are not limited in the present invention.

For example, in a case where the terminal receives a handover command sent by the network device, the terminal may prepare to access the target access point according to the instruction of the handover command. That is, the terminal initiates the handover to access the target access point based on the instruction of the handover command.

For another example, based on the CHO process, the terminal may prepare to access the target access point on its own when the handover condition is met. That is, the terminal initiates the handover to access the target access point based on the CHO process.

In some embodiments, the terminal may acquire the first parameter corresponding to the target access point when the terminal determines to access the target access point, and determine the target TA for accessing the target access point according to the first parameter.

In S203, the terminal accesses the target access point according to the target TA.

For example, the terminal may access the target access point according to the target TA in a random access channel less (RACH-less) manner. For example, the terminal can skip the random access process and directly send an RRC configuration completion message to the target access point according to the target TA, so as to access the target access point.

It should be noted that in embodiments shown in the present invention, the target access point may include one or more of: the target cell or the target beam; the candidate access point may also include one or more of: the candidate cell or the candidate beam.

In some embodiments, the target access point may include a target cell. The target cell may be different from a serving cell of the terminal, or may be the same as the serving cell. The serving cell represents a cell currently used by the terminal.

In this way, the terminal can acquire target TAs of different cells.

In some other embodiments, the target access point may be a target beam. The target beam may be different from a serving beam of the terminal, or may be the same as the serving beam. The serving beam represents a beam currently used by the terminal. Further, the target beam and the serving beam may be in the same cell or in different cells.

In some other embodiments, the target access point may include a target cell and a target beam. For example, the terminal may switch from the serving beam of the serving cell to the target beam of the target cell to access.

In this way, the terminal can acquire target TAs of different beams.

With the above method, the terminal can determine the first parameter corresponding to at least one candidate access point, determine the target timing advance (TA) for accessing the target access point according to the first parameter, and access the target access point according to the target TA. The at least one candidate access point may include the target access point, and the access point may include a cell and/or a beam. In this way, the terminal is able to determine the target TA according to the first parameter, and access the target access point according to the target TA, thereby saving the time for determining the target TA through the random access process, reducing the handover delay, and improving the data transmission efficiency during the handover process.

FIG. 3 shows a schematic flowchart of an access method according to an example embodiment. As shown in FIG. 3, the method may include the following actions.

In S301, the terminal receives a first message sent by a network device.

The first message may include a first parameter corresponding to at least one candidate access point. In this way, when receiving the first message, the terminal can obtain the first parameter corresponding to the at least one candidate access point from the first message.

The first message may be any message or data packet sent by the network device to the terminal.

In some embodiments, the first message may be any RRC message sent by the network device to the terminal, such as an RRC reconfiguration message, an RRC access success message, or other RRC messages.

In some other embodiments, the first message may be other RRC messages except the handover command message. For example, the first message may be a message for instructing the terminal to perform the CHO handover, such as a CHO handover command message.

In some other embodiments, the first message may be a system message, and the network device may broadcast the first parameter corresponding to the at least one candidate access point through the system message.

The at least one candidate access point may include a target access point, and the access point may be a cell and/or a beam.

In a case where the access point includes the cell, the candidate access point may include one or more of: a serving cell or a neighboring cell. The serving cell may be a cell that the terminal currently accesses or resides in. For example, the serving cell may provide a wireless communication service for the terminal.

In some embodiments, the neighboring cell may include a cell between which and the serving cell a cell neighbor relationship is configured. In some other embodiments, the neighboring cell may include a cell to which a distance from the serving cell is less than or equal to a preset neighboring cell distance threshold. In some other embodiments, the neighboring cell may include a cell between which and the serving cell a cell neighbor relationship is configured and to which a distance from the serving cell is less than or equal to a preset neighboring cell distance threshold. In some other embodiments, the neighboring cell may include a cell between which and the serving cell a cell neighbor relationship is configured, or a cell to which a distance from the serving cell is less than or equal to a preset neighboring cell distance threshold. The preset neighboring cell distance threshold may be any preset distance threshold.

In a case where the access point is the beam, the candidate access point may include one or more of: a serving beam or a neighboring beam. The serving beam may be a beam that the terminal currently accesses or resides in. For example, the serving beam may provide a wireless communication service for the terminal.

Likewise, in some embodiments, the neighboring beam may include a beam between which and the serving beam a beam neighbor relationship is configured. In some other embodiments, the neighboring beam may include a beam to which a distance from the serving beam is less than or equal to a preset neighboring beam distance threshold. In some other embodiments, the neighboring beam may include a beam between which and the serving beam a beam neighbor relationship is configured and to which a distance from the serving beam is less than or equal to a preset neighboring beam distance threshold. In some other embodiments, the neighboring beam may include a beam between which and the serving beam a beam neighbor relationship is configured, or a beam to which a distance from the serving beam is less than or equal to a preset neighboring beam distance threshold. The preset neighboring beam distance threshold may be any preset distance threshold.

In S302, in a case where the terminal determines the target access point to access, the terminal determines a target timing advance (TA) for accessing the target access point according to the first parameter.

In S303, the terminal accesses the target access point according to the target TA.

In this way, the terminal may receive the first parameter from the network device, determine the target TA according to the first parameter, and access the target access point according to the target TA, thereby saving the time for determining the target TA through the random access process, reducing the handover delay, and improving the data transmission efficiency during the handover process.

The above first parameter may include at least one access point identifier of the at least one candidate access point and an access point TA parameter corresponding to each access point identifier. In this way, the terminal is able to determine a target access point TA parameter corresponding to a target access point identifier according to the first parameter. The target access point identifier may be the access point identifier corresponding to the target access point to access; and the target TA is determined according to the target access point TA parameter.

The access point identifier may include one or more of: a cell identifier or a beam identifier. For example, the cell identifier may include a cell global identifier (CGI), and the beam identifier may be determined according to a transmission configuration indicator (TCI).

In some embodiments, the access point identifier may include the cell identifier, and the access point TA parameter may include a cell TA parameter. In some other embodiments, the access point identifier may include the beam identifier, and the access point TA parameter may include a beam TA parameter. In some other embodiments, the access point identifier may include the cell identifier and the beam identifier, and the access point TA parameter may include the cell TA parameter and the beam TA parameter.

In some embodiments, the above access point TA parameter may include a candidate TA. The candidate TA may be configured to instruct the terminal to acquire a TA length corresponding to the access point identifier.

For example, the candidate TA may include an access point TA length (the access point TA length may be any value greater than or equal to 0) or an access point timing advance group (TAG) identifier. That is, the above access point TA parameter may include the access point TA length or the access point TAG identifier. In this way, the terminal is able to determine a length of the target TA corresponding to the target access point identifier according to the candidate TA (or the access point TA parameter). For example, the access point TA length corresponding to the target access point identifier may be used as the TA length of the target TA; or the TA length of the target TA may be determined according to the access point TAG identifier corresponding to the target access point identifier.

It should be noted that the terminal may store N timing advance groups (TAGs), where N may be a positive integer greater than or equal to 1, for example, N is 4. Each TAG may include at least one cell, and the at least one cell in the same TAG uses the same TA length. Individual TAGs may be distinguished by respective TAG identifiers, that is, different TAGs have different TAG identifiers. In addition, each cell may belong to a TAG. In this way, the corresponding TA length may be determined through the TAG identifier.

In some embodiments, the above candidate TA may also include a TA offset (N_{TA} offset).

In some other embodiments, the above target access point TA parameter may include at least one candidate TA and first condition information corresponding to each candidate TA.

In this way, the terminal is able to determine whether the terminal meets a TA validation condition according to the first condition information; and determine the target TA according to the candidate TA corresponding to the first condition information when it is determined that the terminal meets the TA validation condition.

It should be noted that the candidate TA may also include the access point TA length or the access point TAG identifier.

In some embodiments, in a case where the access point TA parameter includes the candidate TA but does not include the first condition information, the terminal can directly obtain the target TA corresponding to the target access point without performing condition judgment.

The above first condition information includes one or more of: preset signal condition information, preset position condition information or preset time condition information. The respective explanations are provided below

Information 1: preset signal condition information.

The preset signal condition information may be configured to instruct the terminal to determine whether the terminal meets the TA validation condition according to a wireless signal strength of the target access point detected.

In some embodiments, in a case where the first condition information includes the preset signal condition information, the TA validation condition may include that the wireless signal strength of the target access point detected by the terminal is within a target signal strength range, and the target signal strength range may be a signal strength range determined according to the preset signal condition information.

The wireless signal strength may include a reference signal receiving power (RSRP) or received signal strength indicator (RSSI) detected by the terminal.

Explanations are made with reference to an example where the wireless signal strength is the RSRP, the preset signal condition information may include a correspondence between at least one RSRP and at least one TA. For example, the preset signal condition information may include a correspondence between multiple RSRP ranges and TAs. For example, a TA corresponding to a signal condition where the RSRP is less than a first RSRP value may be a first candidate TA; a TA corresponding to a signal condition where the RSRP is between the first RSRP value and a second RSRP value (for example, the RSRP is greater than or equal to the first RSRP value and less than the second RSRP value) may be a second candidate TA; a TA corresponding to a signal condition where the RSRP is between the second RSRP value and a third RSRP value (for example, the RSRP is greater than or equal to the second RSRP value and less than the third RSRP value) may be a third candidate TA; and a TA corresponding to a signal condition where the RSRP is greater than or equal to the third RSRP value may be a fourth candidate TA. The first to fourth RSRP values described above may be set based on experiences. For example, the relationship of the above RSRP values may be: the first RSRP value < the second RSRP value < the third RSRP value < the fourth RSRP value. In some other embodiments, more or less interval ranges may be set. For example, M+1 RSRP interval ranges may be obtained through division using M RSRPs arranged from small to large, and each RSRP range corresponds to a candidate TA.

In this way, when the terminal detects that the RSRP of the target access point is within the target signal strength range, the target TA can be determined according to the candidate TA corresponding to the target signal strength range. For example, when the RSRP of the target access point detected by the terminal is greater than or equal to the first RSRP value and less than the second RSRP value, the above second candidate TA may be used as the target TA.

It should be noted that the preset signal condition information may include signal condition information corresponding to the candidate access point of the terminal. One or more candidate access points may exist. For example, when the access point is a cell, the candidate access point may include one or more of: a serving cell, a handover target cell, or a neighboring cell. For another example, in the case where the access point is a beam, the candidate access point may include one or more of: a serving beam, a handover target beam, or a neighboring beam.

In this way, the terminal can determine whether the terminal meets the TA validation condition according to the preset signal condition information, and determine the target TA according to the candidate TA corresponding to the preset signal condition information when it is determined that the terminal meets the TA validation condition.

Information 2: preset position condition information.

The preset position condition information may be configured to instruct the terminal to determine whether the terminal meets the TA validation condition according to position information of the terminal.

In some embodiments, in a case where the first condition information includes the preset position condition information, the preset position condition information may include at least one first candidate cell; and the TA validation condition may include that a serving cell of the terminal is included in the at least one first candidate cell.

For example, the terminal may determine at least one first candidate cell according to the preset position condition information. In the case where the serving cell is included in the at least one first candidate cell, it may be determined that the terminal meets the TA validation condition. Therefore, the target TA can be determined according to the candidate TA corresponding to the preset position condition information.

In some other embodiments, in the case where the first condition information includes the preset position condition information, the preset position condition information may include at least one second candidate cell and a first distance parameter corresponding to each second candidate cell. The TA validation condition may include that a first distance between the terminal and an antenna corresponding to the second candidate cell is less than or equal to a first distance threshold, and the first distance threshold is determined according to the first distance parameter.

For example, the terminal may determine the first distance threshold according to the first distance parameter, and in the case where a distance between the terminal and the second candidate cell is less than or equal to the first distance threshold, the terminal may determine that the terminal meets the TA validation condition, and determine the target TA according to the candidate TA corresponding to the preset position condition information.

In embodiments of the present invention, the terminal may determine the first distance threshold according to the first distance parameter in several ways. For example, the terminal may regard the first distance parameter as the first distance threshold. For another example, the terminal may determine the first distance threshold corresponding to the first distance parameter according to a preset correspondence between distance parameters and distance thresholds. The same preset correspondence between distance parameters and distance thresholds may be set for both the terminal and the network device. For example, a first distance parameter of 1 may correspond to a first distance threshold of 30, a first distance parameter of 2 may correspond to a first distance threshold of 50, a first distance parameter of 3 may correspond to a first distance threshold of 100, and so on.

In some other embodiments, in a case where the first condition information includes the preset position condition information, the preset position condition information includes a preset position parameter and a second distance parameter; and the TA validation condition includes that a second distance between the terminal and a preset position is less than or equal to a second distance threshold, the preset position is a geographical position determined according to the preset position parameter, and the second distance threshold is determined according to the second distance parameter.

For example, the terminal may determine the second distance threshold according to the second distance parameter, and in the case where the distance between the terminal and the preset position is less than or equal to the second distance threshold, the terminal may determine that the terminal meets the TA validation condition, and determine the target TA according to the candidate TA corresponding to the preset position condition information. The preset position may be a geographical position determined according to the preset position parameter.

For example, the preset position parameter may be latitude and longitude parameters, and the preset position may be determined according to the latitude and longitude parameters.

Similarly, there may also exist several ways for the terminal to determine the second distance threshold according to the second distance parameter. For example, the terminal may regard the second distance parameter as the second distance threshold. For another example, the terminal may determine the second distance threshold corresponding to the second distance parameter according to a preset correspondence between distance parameters and distance thresholds.

In this way, the terminal can determine whether the terminal meets the TA validation condition according to the preset position condition information, and when it is determined that the terminal meets the TA validation condition, the terminal determines the target TA according to the candidate TA corresponding to the preset position condition information.

Information 3: preset time condition information.

The preset time condition information may be configured to instruct the terminal to determine whether the terminal meets the TA validation condition according to a time when access is initiated.

For example, in a case where the first condition information includes the preset time condition information, the preset time condition information includes a preset time parameter; the TA validation condition includes that a current time of the terminal is within a first time range; and the first time range is determined according to the preset time parameter.

In some embodiments, the preset time parameter includes a first absolute time and a first duration. The above first time range may be determined according to the first absolute time and the first duration.

The first absolute time and the first duration may be determined by the network device according to a preconfigured parameter.

For example, a time range obtained by a combination of the first absolute time and the first duration may be used as the first time range. For example, the first absolute time may be a preset absolute time (for example, 19 o'clock), the first duration may be a preset time length (for example, 30 minutes), so the time range from 19:00 to 19:30 may be used as the first time range.

In this way, in the case where the current time of the terminal is within the first time range, it may be determined that the terminal meets the target TA validation condition.

In some embodiments, the preset time parameter includes a second duration and a first preset condition; the above first time range may be determined in such a manner that the second duration from when the terminal meets a first preset condition is taken as the first time range.

For example, the first time range may be determined through a first timer. When the terminal meets the first preset condition, the first timer may be started or restarted. A duration of the first timer may be the second duration. Within a running time range of the first timer, it may be determined that the current time of the terminal is within the first time range, that is, it may be determined that the terminal meets the TA effective condition.

The first preset condition may include one or more of the following conditions.

Condition 1: the terminal receives the first message sent by the network device.

For example, the above first timer may be started or restarted according to the second duration when the first message sent by the network device is received.

Condition 2: the current time of the terminal is equal to a second absolute time.

The second absolute time may be determined by the terminal according to the time parameter received from the network device.

For example, the above first timer may be started or restarted according to the second duration when the current time of the terminal is equal to the second absolute time,
Condition 3: the terminal determines according to the preset signal condition information that the terminal meets the TA validation condition.
Condition 4: the terminal determines according to the preset position condition information that the terminal meets the TA validation condition.

For example, in a case where the terminal triggers a target event, the above first timer may be started or restarted according to the second duration. The target event may include an event corresponding to the above Condition 3 or Condition 4.

In this way, the terminal can determine whether the terminal meets the TA validation condition according to the preset time condition information, and determine the target TA according to the candidate TA corresponding to the preset time condition information when it is determined that the terminal meets the TA validation condition.

With the above method, the terminal can determine whether the terminal meets the TA validation condition according to any one or more conditions included in the above first condition information; and determine the target TA according to the candidate TA corresponding to the first condition information when it is determined that the terminal meets the TA validation condition.

In some embodiments, in the case where the terminal meets any condition included in the above first condition information, the terminal can determine the target TA according to the candidate TA corresponding to the first condition information. For example, the candidate TA may be regarded as the target TA.

In some other embodiments, in the case where the terminal meets multiple conditions included in the above first condition information, the terminal can determine the target TA according to the candidate TAs corresponding to the multiple conditions included in the first condition information. For example, an average, maximum or minimum value of the candidate TAs corresponding to the multiple conditions included in the first condition information may be regarded as the target TA.

In this way, the terminal can determine the target TA according to various condition information, so as to access the target access point (e.g., the target cell or the target beam) according to the target TA.

In some embodiments of the present invention, the terminal may also determine an uplink channel resource parameter, and perform uplink transmission according to the uplink channel resource parameter in a case where the target TA for accessing the target access point is determined according to the first parameter.

For example, the terminal may perform the uplink transmission through the target access point (e.g., the target cell or the target beam) according to the uplink channel resource parameter.

The uplink channel resource parameter may include a parameter for indicating an uplink physical uplink shared channel (PUSCH) resource. The uplink PUSCH resource may be an available PUSCH resource provided by the network device, such as a reserved PUSCH resource.

In some embodiments, the terminal may receive a second message sent by the network device, and the second message may include the uplink channel resource parameter. In this way, when receiving the second message sent by the network device, the terminal can obtain the uplink channel resource parameter in the second message, and determine the uplink PUSCH resource according to the uplink resource parameter. The second message may be the same as or different from the first message.

There are many ways for the terminal to perform the uplink transmission according to the uplink channel resource parameter, examples are provided below.

In some embodiments, the terminal may send an uplink RRC message according to the uplink channel resource parameter. The uplink RRC message may include an RRC reconfiguration completion message, an RRC reconfiguration failure message, or other RRC messages.

In some other embodiments, the terminal may send uplink data according to the uplink channel resource parameter.

In some other embodiments, the terminal may send the uplink RRC message and the uplink data according to the uplink channel resource parameter.

In this way, the terminal can perform the uplink transmission according to the uplink channel resource parameter in the case where the target TA is determined, thereby reducing the service interruption delay caused by the handover, and improving the data transmission efficiency.

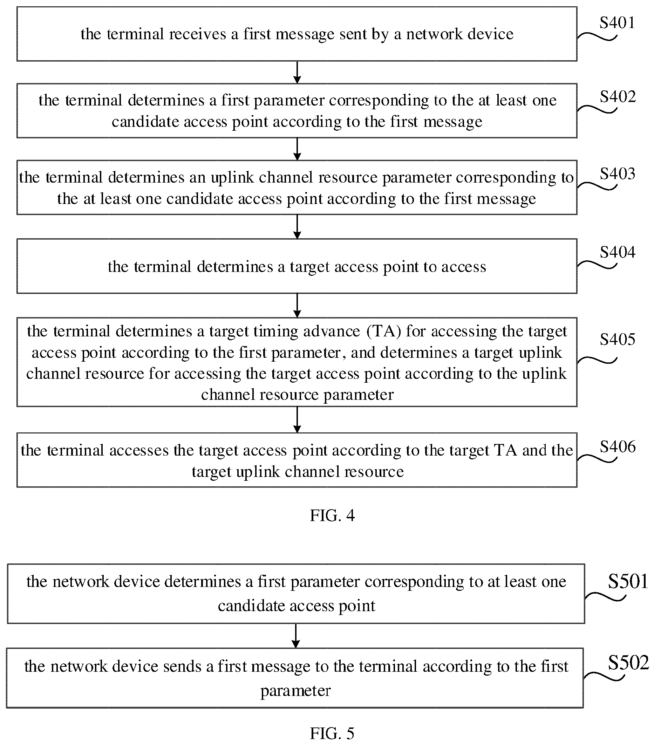

FIG. 4 shows a schematic flowchart of an access method according to an example embodiment. As shown in FIG. 4, the method may include the following actions.

In S401, the terminal receives a first message sent by a network device.

The first message may be any message or data packet sent by the network device to the terminal. For example, the first message may be a message configured to instruct the terminal to perform CHO handover, such as a CHO handover command message.

In some embodiments, the first message may also include a first parameter corresponding to at least one candidate access point.

In some other embodiments, the first message may also include an uplink channel resource parameter corresponding to the at least one candidate access point.

In some other embodiments, the first message may also include the first parameter and the uplink channel resource parameter corresponding to the at least one candidate access point.

In S402, the terminal determines the first parameter corresponding to the at least one candidate access point according to the first message.

The first parameter may be configured to instruct the terminal to determine a timing advance (TA) for accessing the candidate access point. For example, the first parameter may include at least one access point identifier of the at least one candidate access point and an access point TA parameter corresponding to each access point identifier. Further, the access point TA parameter may include at least one candidate TA and first condition information corresponding to each candidate TA.

In S403, the terminal determines the uplink channel resource parameter corresponding to the at least one candidate access point according to the first message.

In S404, the terminal determines a target access point to access.

It should be noted that the above steps S402, S403 and S404 may be executed in any order or in parallel, which is not limited in the present invention.

In S405, the terminal determines a target timing advance (TA) for accessing the target access point according to the first parameter, and determines a target uplink channel resource for accessing the target access point according to the uplink channel resource parameter.

In S406, the terminal accesses the target access point according to the target TA and the target uplink channel resource.

For example, the terminal may use the target uplink channel resource (such as a PUSCH resource) to send an RRC reconfiguration completion message or uplink data to the target access point according to the target TA, so as to access the target access point for communication.

In this way, the terminal can access the target access point according to the target TA and the target uplink channel resource, which further reduces the service interruption delay caused by the handover and improves the data transmission efficiency.

FIG. 5 shows a schematic flowchart of an access method according to an example embodiment. The method may be performed by the network device in the above communication system. As shown in FIG. 5, the method may include the following actions.

In S501, the network device determines a first parameter corresponding to at least one candidate access point.

The at least one candidate access point may include a target access point, and an access point may be a cell and/or a beam. For example, in a possible embodiment, the network device may determine a first parameter corresponding to at least one candidate cell, and the at least one candidate cell may include a target cell; in another possible embodiment, the network device may determine a first parameter corresponding to at least one candidate beam, and the at least one candidate beam may include a target beam; in another possible embodiment, the network device may determine a first parameter corresponding to at least one candidate cell and candidate beam. The first parameter corresponding to the target access point may be configured to instruct the terminal to determine a timing advance (TA) for accessing the target access point.

In a case where the access point includes the cell, the candidate access point may include one or more of: a serving cell or a neighboring cell determined by the network device. The serving cell may be a cell that the terminal currently accesses or resides in. For example, the serving cell may provide a wireless communication service for the terminal.

In some embodiments, the neighboring cell may include a cell between which and the serving cell a cell neighbor relationship is configured. In some other embodiments, the neighboring cell may include a cell to which a distance from the serving cell is less than or equal to a preset neighboring cell distance threshold. In some other embodiments, the neighboring cell may include a cell between which and the serving cell a cell neighbor relationship is configured and to which a distance from the serving cell is less than or equal to a preset neighboring cell distance threshold. In some other embodiments, the neighboring cell may include a cell between which and the serving cell a cell neighbor relationship is configured, or a cell to which a distance from the serving cell is less than or equal to a preset neighboring cell distance threshold. The preset neighboring cell distance threshold may be any preset distance threshold.

In a case where the access point includes the beam, the candidate access point may include one or more of: a serving beam or a neighboring beam. The serving beam may be a beam that the terminal currently accesses or resides in. For example, the serving beam may provide a wireless communication service for the terminal.

Likewise, in some embodiments, the neighboring beam may include a beam between which and the serving beam a beam neighbor relationship is configured. In some other embodiments, the neighboring beam may include a beam to which a distance from the serving beam is less than or equal to a preset neighboring beam distance threshold. In some other embodiments, the neighboring beam may include a beam between which and the serving beam a beam neighbor relationship is configured and to which a distance from the serving beam is less than or equal to a preset neighboring beam distance threshold. In some other embodiments, the neighboring beam may include a beam between which and the serving beam a beam neighbor relationship is configured, or a beam to which a distance from the serving beam is less than or equal to a preset neighboring beam distance threshold. The preset neighboring beam distance threshold may be any preset distance threshold.

In S502, the network device sends a first message to the terminal according to the first parameter.

The first message may include the first parameter; and the first parameter may be configured to instruct the terminal to determine a target timing advance (TA) for accessing the target access point in a case where the terminal is to access the target access point, and access the target access point according to the target TA.

It should be noted that the terminal may determine whether to access the target access point according to a preset condition. The preset condition may include a handover condition, a radio resource control (RRC) reconstruction condition or other conditions; and the ways for the terminal to access the target access point may include handover-based access, RRC reconstruction-based access or direct access, which are not limited in the present invention.

For example, in a case where the terminal receives a handover command sent by the network device, the terminal may prepare to access the target access point according to the instruction of the handover command. That is, the terminal initiates the handover to access the target access point based on the instruction of the handover command.

For another example, based on the CHO process, the terminal may prepare to access the target access point on its own when the handover condition is met. That is, the terminal initiates the handover to access the target access point based on the CHO process.

With the above method, the network device can determine the first parameter corresponding to at least one candidate access point, and send the first message to the terminal according to the first parameter. The at least one candidate access point may include the target access point, and the access point may include a cell and/or a beam; the first message may include the first parameter; and the first parameter may be configured to instruct the terminal to determine the target timing advance (TA) for accessing the target access point in the case where the terminal is to access the target access point, and access the target access point according to the target TA. In this way, the network device can instruct the terminal to determine the target TA according to the first parameter, and access the target access point according to the target TA, thereby saving the time for determining the target TA through the random access process, reducing the handover delay, and improving the data transmission efficiency during the handover process.

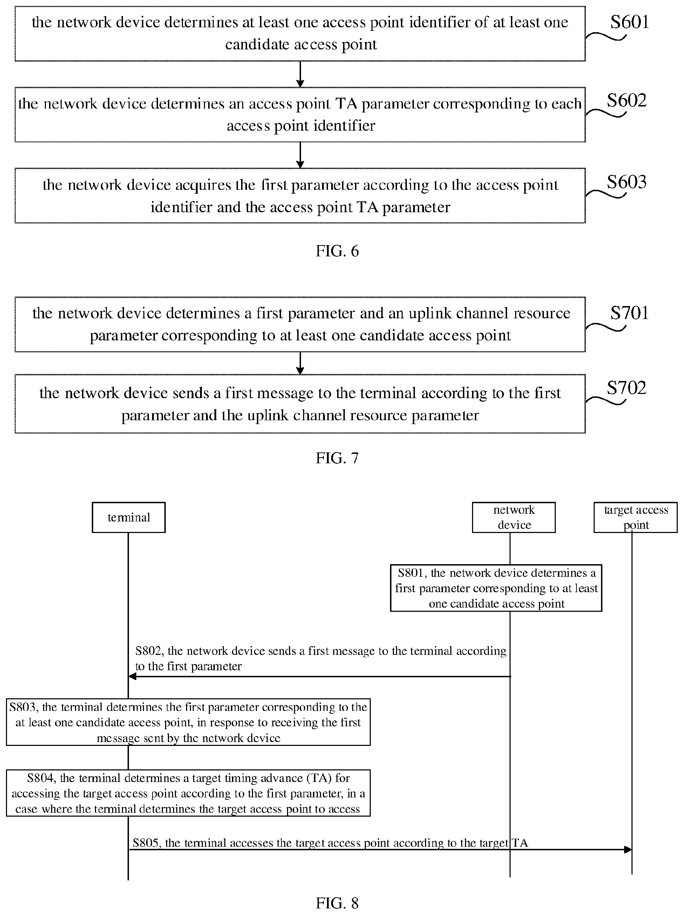

FIG. 6 shows a schematic flowchart of a method for determining a first parameter by a network device according to an example embodiment. As shown in FIG. 6, the method may include the following actions.

In S601, the network device determines at least one access point identifier of at least one candidate access point.

The access point identifier may include one or more of: a cell identifier or a beam identifier. For example, the cell identifier may include a cell global identifier (CGI), and the beam identifier may be determined according to a transmission configuration indicator (TCI).

In S602, the network device determines an access point TA parameter corresponding to each access point identifier.

The access point TA parameter may be a parameter preconfigured by the network device. For example, the network device may preconfigure at least one access point identifier and the access point TA parameter corresponding to each access point identifier.

In some embodiments, the access point identifier may include the cell identifier, and the access point TA parameter may include a cell TA parameter. In some other embodiments, the access point identifier may include the beam identifier, and the access point TA parameter may include a beam TA parameter. In some other embodiments, the access point identifier may include the cell identifier and the beam identifier, and the access point TA parameter may include the cell TA parameter and the beam TA parameter.

In S603, the network device acquires the first parameter according to the access point identifier and the access point TA parameter.

In this way, the network device can determine the first parameter corresponding to the at least one candidate access point.

In some embodiments, the above access point TA parameter may include a candidate TA. The candidate TA may be configured to instruct the terminal to acquire a TA length corresponding to the access point identifier.

For example, the candidate TA may include an access point TA length (the access point TA length may be any value greater than or equal to 0) or an access point TAG identifier. That is, the above access point TA parameter may include the access point TA length or the access point TAG identifier. In this way, the terminal can determine a length of the target TA corresponding to the target access point identifier according to the candidate TA (or the access point TA parameter). For example, the access point TA length corresponding to the target access point identifier may be used as the TA length of the target TA; or the TA length of the target TA may be determined according to the access point TAG identifier corresponding to the target access point identifier.

In some embodiments, the above candidate TA may also include a TA offset (N_{TA} offset).

In some other embodiments, the above access point TA parameter may include at least one candidate TA and first condition information corresponding to each candidate TA.

For example, the network device can obtain the access point TA parameter in the following manner.

First, at least one candidate TA corresponding to the access point identifier is acquired.

Secondly, first condition information corresponding to each candidate TA is determined.

Finally, the access point TA parameter is determined according to the candidate TA and the first condition information.

The above first condition information includes one or more of: preset signal condition information, preset position condition information or preset time condition information. The respective explanations are provided below

Information 1: preset signal condition information.

The preset signal condition information may be configured to instruct the terminal to determine whether the terminal meets a TA validation condition according to a wireless signal strength of the target access point detected.

For example, in a case where the first condition information includes the preset signal condition information, the TA validation condition includes that the wireless signal strength of the target access point detected by the terminal is within a target signal strength range, and the target signal strength range is a signal strength range determined according to the preset signal condition information.

In some embodiments, in the case where the first condition information includes the preset signal condition information, the TA validation condition may include that the wireless signal strength of the target access point detected by the terminal is within the target signal strength range, and the target signal strength range may be a signal strength range determined according to the preset signal condition information. The wireless signal strength may include an RSRP or RSSI detected by the terminal.

Information 2: preset position condition information.

The preset position condition information may be configured to instruct the terminal to determine whether the terminal meets the TA validation condition according to position information of the terminal.

In some embodiments, in a case where the first condition information includes the preset position condition information, the preset position condition information may include at least one first candidate cell; and the TA validation condition may include that a serving cell of the terminal is included in the at least one first candidate cell.

For example, the preset position condition information may be configured to instruct the terminal to determine at least one first candidate cell according to the preset position condition information. In the case where the serving cell is included in the first candidate cell, it may be determined that the terminal meets the TA validation condition. Therefore, the target TA can be determined according to the candidate TA corresponding to the preset position condition information.

In some other embodiments, in a case where the first condition information includes the preset position condition information, the preset position condition information may include at least one second candidate cell and a first distance parameter corresponding to each second candidate cell. The TA validation condition may include that a first distance between the terminal and an antenna corresponding to the second candidate cell is less than or equal to a first distance threshold, and the first distance threshold is determined according to the first distance parameter.

For example, the preset position condition information may be configured to instruct the terminal to determine the first distance threshold according to the first distance parameter, and in the case where a distance between the terminal and the second candidate cell is less than or equal to the first distance threshold, the terminal determines that the terminal meets the TA validation condition, and determines the target TA according to the candidate TA corresponding to the preset position condition information.

In some other embodiments, in a case where the first condition information includes the preset position condition information, the preset position condition information includes a preset position parameter and a second distance parameter; and the TA validation condition includes that a second distance between the terminal and a preset position is less than or equal to a second distance threshold, the preset position is a geographical position determined according to the preset position parameter, and the second distance threshold is determined according to the second distance parameter.

For example, the preset position condition information may be configured to instruct the terminal to determine the second distance threshold according to the second distance parameter, and in the case where the distance between the terminal and the preset position is less than or equal to the second distance threshold, the terminal determines that the terminal meets the TA validation condition, and determines the target TA according to the candidate TA corresponding to the preset position condition information. The preset position may be a geographical position determined according to the preset position parameter.

Information 3: preset time condition information.

The preset time condition information may be configured to instruct the terminal to determine whether the terminal meets the TA validation condition according to a time when access is initiated.

For example, in a case where the first condition information includes the preset time condition information, the preset time condition information includes a preset time parameter; the TA validation condition includes that a current time of the terminal is within a first time range; and the first time range is a time range determined according to the preset time parameter.

In some embodiments, the preset time parameter includes a first absolute time and a first duration. The above first time range may be determined according to the first absolute time and the first duration.

In some embodiments, the preset time parameter includes a second duration and a first preset condition; the above first time range may be determined in such a manner that the second duration from when the terminal meets a first preset condition is taken as the first time range.

The first preset condition may include one or more of the following conditions.

Condition 1: the terminal receives the first message sent by the network device.

Condition 2: the current time of the terminal is equal to a second absolute time.

The second absolute time may be a time determined according to the time parameter sent by the network device to the terminal.

Condition 3: the terminal determines according to the preset signal condition information that the terminal meets the TA validation condition.

Condition 4: the terminal determines according to the preset position condition information that the terminal meets the TA validation condition.

With the above method, the network device can instruct the terminal to determine whether the terminal meets the TA validation condition according to any one or more conditions included in the above first condition information; and determine the target TA according to the candidate TA corresponding to the first condition information when it is determined that the terminal meets the TA validation condition.

In some embodiments of the present invention, the network device may also determine an uplink channel resource parameter, and send a second message to the terminal according to the uplink channel resource parameter.

The second message may include the uplink channel resource parameter. The uplink channel resource parameter may be configured to instruct the terminal to perform uplink transmission according to the uplink channel resource parameter after the target TA for accessing the target access point is determined according to the first parameter.

It should be noted that the second message may be the same as or different from the first message.

The uplink channel resource parameter may include a parameter for indicating an uplink PUSCH resource. The uplink PUSCH resource may be an available PUSCH resource provided by the network device, such as a reserved PUSCH resource.

In some embodiments, the network device may instruct the terminal to send an uplink RRC message according to the uplink channel resource parameter, so that the network device can receive the uplink RRC message sent by the terminal according to the uplink channel resource parameter. The uplink RRC message may include an RRC reconfiguration completion message, an RRC reconfiguration failure message, or other RRC messages.

In some other embodiments, the network device may instruct the terminal to send uplink data according to the uplink channel resource parameter, so that the network device can receive the uplink data sent by the terminal according to the uplink channel resource parameter.

In some other embodiments, the network device may instruct the terminal to send an uplink RRC message and uplink data according to the uplink channel resource parameter, so that the network device can receive the uplink RRC messages and the uplink data sent by the terminal according to the uplink channel resource parameter.

In this way, the network device can instruct the terminal to perform uplink transmission according to the uplink channel resource parameter when the target TA is determined, thereby reducing the service interruption delay caused by the handover and improving the data transmission efficiency.

FIG. 7 shows a schematic flowchart of an access method according to an example embodiment. As shown in FIG. 7, the method may include the following actions.

In S701, the network device determines a first parameter and an uplink channel resource parameter corresponding to at least one candidate access point.

In S702, the network device sends a first message to the terminal according to the first parameter and the uplink channel resource parameter.

The first message may include the first parameter and the uplink channel resource parameter as described above; the at least one candidate access point may include a target access point, and the access point may include a cell and/or a beam. The first parameter corresponding to the target access point may be configured to instruct the terminal to determine a timing advance (TA) for accessing the target access point. The uplink channel resource parameter corresponding to the target access point may be configured to instruct the terminal to perform uplink transmission according to the uplink channel resource parameter after the target TA for accessing the target access point is determined according to the first parameter.

For example, the uplink channel resource parameter may include a parameter for indicating an uplink PUSCH resource.

In this way, the network device can instruct the terminal to access the target access point according to the target TA and target uplink channel resource, thereby further reducing the service interruption delay caused by the handover and improving the data transmission efficiency.

FIG. 8 shows a schematic flowchart of an access method according to an example embodiment. As shown in FIG. 8, the method may include the following actions.

In S801, the network device determines a first parameter corresponding to at least one candidate access point.

The at least one candidate access point may include a target access point, and the access point includes a cell and/or a beam. The first parameter corresponding to the target access point may be configured to instruct the terminal to determine a timing advance (TA) for accessing the target access point.

In S802, the network device sends a first message to the terminal according to the first parameter.

In S803, in response to receiving the first message sent by the network device, the terminal determines the first parameter corresponding to the at least one candidate access point.

In S804, the terminal determines the target timing advance (TA) for accessing the target access point according to the first parameter, in a case where the terminal determines the target access point to access.

In S805, the terminal accesses the target access point according to the target TA.

It should be noted that, for specific implementation manners of the above steps, reference may be made to the descriptions in the previous embodiments of the present invention, and details will not be described again here.

In this way, the terminal can determine the target TA according to the first parameter sent by the network device, and access the target access point according to the target TA, thereby saving the time for determining the target TA through the random access process, reducing the handover delay, and improving the data transmission efficiency during the handover process.

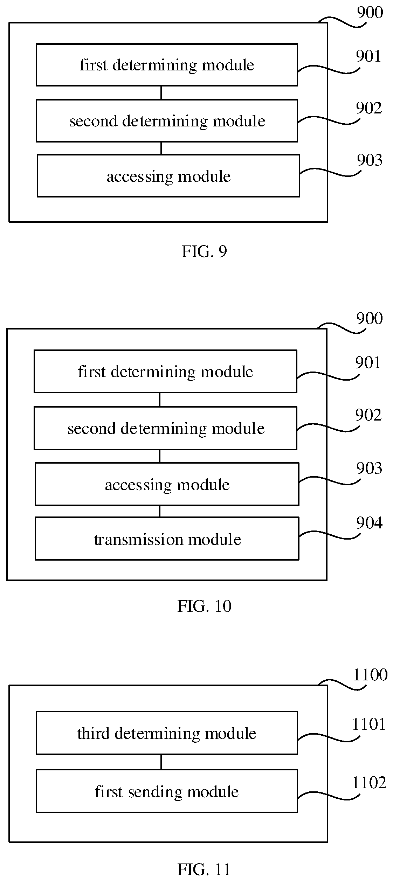

FIG. 9 shows a schematic block diagram of an access apparatus 900 according to an example embodiment. As shown in FIG. 9, the apparatus 900 may include: a first determining module 901, a second determining module 902, and an accessing module 903.

The first determining module 901 is configured to determine a first parameter corresponding to at least one candidate access point; where the at least one candidate access point includes a target access point, and an access point is a cell and/or a beam.

The second determining module 902 is configured to determine a target timing advance (TA) for accessing the target access point according to the first parameter.

The accessing module 903 is configured to access the target access point according to the target TA.

In some embodiments, the first determining module 901 is configured to: receive a first message sent by a network device. The first message includes the first parameter corresponding to the at least one candidate access point.

In some embodiments, the first parameter includes at least one access point identifier of the at least one candidate access point and an access point TA parameter corresponding to each access point identifier. The second determining module 902 is configured to: determine a target access point TA parameter corresponding to a target access point identifier according to the first parameter; where the target access point identifier is an access point identifier corresponding to the target access point to access; and determine the target TA according to the target access point TA parameter.

In some embodiments, the target access point TA parameter includes at least one candidate TA and first condition information corresponding to each candidate TA. The second determining module 902 is configured to: determine the target TA according to the target access point TA parameter includes: determine whether the terminal meets a TA validation condition according to the first condition information; and determine the target TA according to the candidate TA corresponding to the first condition information when it is determined that the terminal meets the TA validation condition.

In some embodiments, the first condition information includes at least one of:
preset signal condition information, configured to instruct the terminal to determine whether the terminal meets the TA validation condition according to a wireless signal strength of the target access point detected;
preset position condition information, configured to instruct the terminal to determine whether the terminal meets the TA validation condition according to position information of the terminal; or
preset time condition information, configured to instruct the terminal to determine whether the terminal meets the TA validation condition according to a time when access is initiated.

In some embodiments, in a case where the first condition information includes the preset signal condition information, the TA validation condition includes that the wireless signal strength is within a target signal strength range, and the target signal strength range is determined according to the preset signal condition information.

In some embodiments, in a case where the first condition information includes the preset position condition information, the preset position condition information includes at least one first candidate cell; and the TA validation condition includes that a serving cell of the terminal is included in the at least one first candidate cell.

In some embodiments, in a case where the first condition information includes the preset position condition information, the preset position condition information includes at least one second candidate cell and a first distance parameter corresponding to each second candidate cell; and the TA validation condition includes that a first distance between the terminal and an antenna corresponding to the second candidate cell is less than or equal to a first distance threshold, and the first distance threshold is determined according to the first distance parameter.

In some embodiments, in a case where the first condition information includes the preset position condition information, the preset position condition information includes a preset position parameter and a second distance parameter; and the TA validation condition includes that a second distance between the terminal and a preset position is less than or equal to a second distance threshold, the preset position is a geographical position determined according to the preset position parameter, and the second distance threshold is determined according to the second distance parameter.

In some embodiments, in a case where the first condition information includes the preset time condition information, the preset time condition information includes a preset time parameter; the TA validation condition includes that a current time of the terminal is within a first time range; and the first time range is determined according to the preset time parameter.

In some embodiments, the preset time parameter includes a first absolute time and a first duration; and the first time range is determined according to the first absolute time and the first duration.

In some embodiments, the preset time parameter includes a second duration; and the first time range is determined in such a manner that the second duration from when the terminal meets a first preset condition is taken as the first time range; and the first preset condition includes one or more of:
receiving the first message sent by the network device;
the current time of the terminal being equal to a second absolute time; the second absolute time being a time received by the terminal from the network device;
determining according to the preset signal condition information that the terminal meets the TA validation condition; or
determining according to the preset position condition information that the terminal meets the TA validation condition.

In some embodiments, the access point TA parameter includes an access point TA length or an access point timing advance group (TAG) identifier, and determining the target access point TA parameter corresponding to the target access point identifier according to the first parameter includes: determining a target TA length corresponding to the target access point identifier according to the access point TA parameter.

FIG. 10 shows a schematic block diagram of an access apparatus according to an example embodiment. As shown in FIG. 10, the apparatus 900 may further include: the first determining module 901 and a transmission module 904.

The first determining module 901 is configured to determine an uplink channel resource parameter.

The transmission module 904 is configured to perform uplink transmission according to the uplink channel resource parameter in a case where the target TA for accessing the target access point is determined according to the first parameter.

In some embodiments, the first determining module 901 is configured to receive a second message sent by the network device, and the second message includes the uplink channel resource parameter.

In some embodiments, the transmission module 904 is configured to send an uplink radio resource control (RRC) message according to the uplink channel resource parameter; and/or send uplink data according to the uplink channel resource parameter.

In some embodiments, the accessing module 903 is configured to access the target access point according to the target TA in a random access channel less (RACH-less) manner.

FIG. 11 shows a schematic block diagram of an access apparatus 1100 according to an example embodiment. The access apparatus may be applied to a terminal. As shown in FIG. 11, the access apparatus 1100 may further include: a third determining module 1101 and a first sending module 1102.

The third determining module 1101 is configured to determine a first parameter corresponding to at least one candidate access point. The at least one candidate access point includes a target access point.

The first sending module 1102 is configured to send a first message to a terminal according to the first parameter. The first message includes the first parameter; the first parameter is configured to instruct the terminal to determine a target timing advance (TA) for accessing the target access point in a case where the terminal is to access the target access point, and access the target access point according to the target TA; and an access point includes a cell and/or a beam.

In some embodiments, the third determining module 1101 is configured to: determine at least one access point identifier of the at least one candidate access point; determine an access point TA parameter corresponding to each access point identifier; and acquire the first parameter according to the access point identifier and the access point TA parameter.

In some embodiments, the third determining module 1101 is configured to: acquire at least one candidate TA corresponding to the access point identifier; determine first condition information corresponding to each candidate TA; and determine the access point TA parameter according to the candidate TA and the first condition information.

In some embodiments, the first condition information includes at least one of:
preset signal condition information, configured to instruct the terminal to determine whether the terminal meets a TA validation condition according to a wireless signal strength of the target access point detected;
preset position condition information, configured to instruct the terminal to determine whether the terminal meets a TA validation condition according to position information of the terminal; or
preset time condition information, configured to instruct the terminal to determine whether the terminal meets a TA validation condition according to a time when access is initiated.

In some embodiments, in a case where the first condition information includes the preset signal condition information, the TA validation condition includes that the wireless signal strength of the target access point detected by the terminal is within a target signal strength range, and the target signal strength range is determined according to the preset signal condition information.

In some embodiments, in a case where the first condition information includes the preset position condition information, the preset position condition information includes at least one first candidate cell; and the TA validation condition includes that a serving cell of the terminal is included in the at least one first candidate cell.

In some embodiments, in a case where the first condition information includes the preset position condition information, the preset position condition information includes at least one second candidate cell and a first distance parameter corresponding to each second candidate cell; and the TA validation condition includes that a first distance between the terminal and an antenna corresponding to the second candidate cell is less than or equal to a first distance threshold, and the first distance threshold is determined according to the first distance parameter.

In some embodiments, in a case where the first condition information includes the preset position condition information, the preset position condition information includes a preset position parameter and a second distance parameter; and the TA validation condition includes that a second distance between the terminal and a preset position is less than or equal to a second distance threshold, the preset position is a geographical position determined according to the preset position parameter, and the second distance threshold is determined according to the second distance parameter.

In some embodiments, in a case where the first condition information includes the preset time condition information, the preset time condition information includes a preset time parameter; the TA validation condition includes that a current time of the terminal is within a first time range; and the first time range is determined according to the preset time parameter.

In some embodiments, the access point TA parameter includes an access point TA length or an access point timing advance group (TAG) identifier.

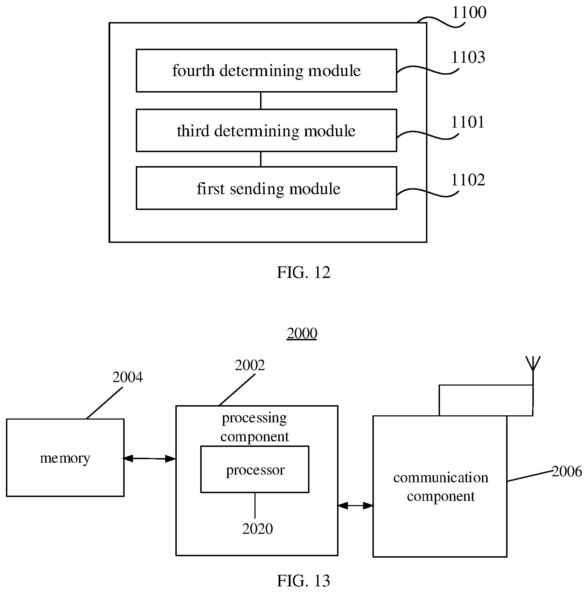

FIG. 12 shows a schematic block diagram of an access apparatus 1100 according to an example embodiment. As shown in FIG. 12, the apparatus 1100 may further include: a fourth determining module 1103.

The fourth determining module 1103 is further configured to determine an uplink channel resource parameter.

The first sending module 1102 is further configured to send a second message to the terminal according to the uplink channel resource parameter. The second message includes the uplink channel resource parameter; the uplink channel resource parameter is configured to instruct the terminal to perform uplink transmission according to the uplink channel resource parameter after the target TA for accessing the target access point is determined according to the first parameter.

With respect to the apparatuses in the above embodiments, the specific manners of individual modules therein for performing operations have been described in detail in the embodiments regarding the methods, and will not be elaborated herein.

FIG. 13 shows a schematic block diagram of an access apparatus according to an example embodiment. The access apparatus 2000 may be a terminal in the communication system shown in FIG. 1, or may be a network device in the communication system.

Referring to FIG. 13, the apparatus 2000 may include one or more of the following components: a processing component 2002, a memory 2004, and a communication component 2006.

The processing component 2002 may be configured to control overall operations of the apparatus 2000, such as the operations associated with display, phone calls, data communications, camera operations, and recording operations. The processing component 2002 may include one or more processors 2020 to execute instructions to perform all or some of the steps in the above-described access methods. Moreover, the processing component 2002 may include one or more modules which facilitate the interaction between the processing component 2002 and other components. For instance, the processing component 2002 may include a multimedia module to facilitate the interaction between the multimedia component and the processing component 2002.

The memory 2004 is configured to store various types of data to support the operation of the apparatus 2000. Examples of such data include instructions for any applications or methods operated on the apparatus 2000, contact data, phonebook data, messages, pictures, videos, etc. The memory 2004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The communication component 2006 is configured to facilitate communication, wired or wireless, between the apparatus 2000 and other devices. The apparatus 2000 can access a wireless network based on a communication standard, such as Wi-Fi, 2G, 3G, 4G, 5G, 6G, NB-IoT, eMTC, or a combination thereof. In an illustrative embodiment, the communication component 2006 receives a broadcast signal or broadcast associated information from an external broadcast management system via a broadcast channel. In an illustrative embodiment, the communication component 2006 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the apparatus 2000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned access method.

The above apparatus 2000 may be an independent electronic device, or may be a part of an independent electronic device. For example, in an embodiment, the electronic device may be an integrated circuit (IC) or a chip, where the integrated circuit may be an IC or a set of ICs; the chip may include but is not limited to: a graphics processing unit (GPU), a central processing unit (CPU), a field programmable gate array (FPGA), a digital signal processor (DSP), an application specific integrated circuit (ASIC), a system on chip (SoC, also called a system-level chip), etc. The above integrated circuit or chip may be used to execute executable instructions (or codes) to implement the above access method. The executable instructions may be stored in the integrated circuit or chip, or may be obtained from other apparatuses or devices. For example, the integrated circuit or chip includes a processor, a memory, and an interface for communicating with other devices. The executable instructions may be stored in the processor, and when the executable instructions are executed by the processor, the above access method is implemented; or the integrated circuit or chip can receive the executable instructions through the interface and transmit the executable instructions to the processor for execution, to implement the above access method.

In an illustrative embodiment, the present invention also provides a computer readable storage medium having stored therein computer program instructions that, when executed by a processor, cause the steps of the access method provided in the present invention to be performed. For example, the computer-readable storage medium may be a non-transitory computer-readable storage medium including instructions, for example, may be the above memory 2004 including instructions, and the above instructions may be executed by the processor 2020 of the apparatus 2000 to complete the above access method. For example, the non-transitory computer-readable storage medium may be a ROM, a random access memory (RAM), a CD-ROM, a magnetic tape, a floppy disk, an optical data storage device, and the like.

In another example embodiment, there is also provided a computer program product including computer programs executable by a programmable device, and the computer programs have code portions that, when executed by the programmable device, cause the above access method to be performed.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. An access method, performed by a terminal, comprising:
determining a first parameter corresponding to at least one candidate access point; wherein the at least one candidate access point comprises a target access point, and an access point is a cell and/or a beam;
determining a target timing advance (TA) for accessing the target access point according to the first parameter; and
accessing the target access point according to the target TA.

2. The method according to claim 1, wherein determining the first parameter corresponding to the at least one candidate access point comprises:
receiving a first message sent by a network device, wherein the first message comprises the first parameter corresponding to the at least one candidate access point.

3. The method according to claim 1, wherein the first parameter comprises at least one access point identifier of the at least one candidate access point and an access point TA parameter corresponding to each access point identifier;
determining the target timing advance (TA) for accessing the target access point according to the first parameter comprises:
determining a target access point TA parameter corresponding to a target access point identifier according to the first parameter; wherein the target access point identifier is an access point identifier corresponding to the target access point to access; and
determining the target TA according to the target access point TA parameter.

4. The method according to claim 3, wherein the target access point TA parameter comprises at least one candidate TA and first condition information corresponding to each candidate TA;
determining the target TA according to the target access point TA parameter comprises:
determining whether the terminal meets a TA validation condition according to the first condition information; and
determining the target TA according to the candidate TA corresponding to the first condition information when it is determined that the terminal meets the TA validation condition.

5. The method according to claim 4, wherein the first condition information comprises at least one of:
preset signal condition information, configured to instruct the terminal to determine whether the terminal meets the TA validation condition according to a wireless signal strength of the target access point detected;
preset position condition information, configured to instruct the terminal to determine whether the terminal meets the TA validation condition according to position information of the terminal; or
preset time condition information, configured to instruct the terminal to determine whether the terminal meets the TA validation condition according to a time when access is initiated.

6. The method according to claim 5, wherein in a case where the first condition information comprises the preset signal condition information, the TA validation condition comprises that the wireless signal strength is within a target signal strength range, and the target signal strength range is determined according to the preset signal condition information.

7. The method according to claim 5, wherein in a case where the first condition information comprises the preset position condition information, the preset position condition information comprises at least one first candidate cell; and the TA validation condition comprises that a serving cell of the terminal is comprised in the at least one first candidate cell.

8. The method according to claim 5, wherein in a case where the first condition information comprises the preset position condition information, the preset position condition information comprises at least one second candidate cell and a first distance parameter corresponding to each second candidate cell; and the TA validation condition comprises that a first distance between the terminal and an antenna corresponding to the second candidate cell is less than or equal to a first distance threshold, and the first distance threshold is determined according to the first distance parameter.

9. The method according to claim 5, wherein in a case where the first condition information comprises the preset position condition information, the preset position condition information comprises a preset position parameter and a second distance parameter; and the TA validation condition comprises that a second distance between the terminal and a preset position is less than or equal to a second distance threshold, the preset position is a geographical position determined according to the preset position parameter, and the second distance threshold is determined according to the second distance parameter.

10. The method according to claim 5, wherein in a case where the first condition information comprises the preset time condition information, the preset time condition information comprises a preset time parameter; the TA validation condition comprises that a current time of the terminal is within a first time range; and the first time range is determined according to the preset time parameter.

11. The method according to claim 10, wherein the preset time parameter comprises a first absolute time and a first duration; and the first time range is determined according to the first absolute time and the first duration.

12. The method according to claim 10, wherein the preset time parameter comprises a second duration; and the first time range is determined in such a manner that the second duration from when the terminal meets a first preset condition is taken as the first time range;
wherein the first preset condition comprises one or more of:
receiving the first message sent by the network device;
the current time of the terminal being equal to a second absolute time; the second absolute time being a time received by the terminal from the network device;
determining according to the preset signal condition information that the terminal meets the TA validation condition; or
determining according to the preset position condition information that the terminal meets the TA validation condition.

13. The method according to claim 3, wherein the access point TA parameter comprises an access point TA length or an access point timing advance group (TAG) identifier, and
determining the target access point TA parameter corresponding to the target access point identifier according to the first parameter comprises:
determining a target TA length corresponding to the target access point identifier according to the access point TA parameter.

14. The method according to claim 1, further comprising:
determining an uplink channel resource parameter; and
performing uplink transmission according to the uplink channel resource parameter in a case where the target TA for accessing the target access point is determined according to the first parameter.

15. The method according to claim 14, wherein determining the uplink channel resource parameter comprises:
receiving a second message sent by the network device, wherein the second message comprises the uplink channel resource parameter.

16. The method according to claim 14, wherein performing the uplink transmission according to the uplink channel resource parameter comprises:
sending an uplink radio resource control (RRC) message according to the uplink channel resource parameter; and/or
sending uplink data according to the uplink channel resource parameter.

17. The method according to any one of claims 1 to 16, wherein accessing the target access point according to the target TA comprises:
accessing the target access point according to the target TA in a random access channel less (RACH-less) manner.

18. An access method, performed by a network device, comprising:
determining a first parameter corresponding to at least one candidate access point; wherein the at least one candidate access point comprises a target access point, and an access point comprises a cell and/or a beam; and
sending a first message to a terminal according to the first parameter; wherein the first message comprises the first parameter; the first parameter is configured to instruct the terminal to determine a target timing advance (TA) for accessing the target access point in a case where the terminal is to access the target access point, and access the target access point according to the target TA.

19. The method according to claim 18, wherein determining the first parameter corresponding to the at least one candidate access point comprises:
determining at least one access point identifier of the at least one candidate access point;
determining an access point TA parameter corresponding to each access point identifier; and
acquiring the first parameter according to the access point identifier and the access point TA parameter.

20. The method according to claim 19, wherein determining the access point TA parameter corresponding to each access point identifier comprises:
acquiring at least one candidate TA corresponding to the access point identifier;
determining first condition information corresponding to each candidate TA; and
determining the access point TA parameter according to the candidate TA and the first condition information.

21. The method according to claim 20, wherein the first condition information comprises at least one of:
preset signal condition information, configured to instruct the terminal to determine whether the terminal meets a TA validation condition according to a wireless signal strength of the target access point detected;
preset position condition information, configured to instruct the terminal to determine whether the terminal meets a TA validation condition according to position information of the terminal; or
preset time condition information, configured to instruct the terminal to determine whether the terminal meets a TA validation condition according to a time when access is initiated.

22. The method according to claim 21, wherein in a case where the first condition information comprises the preset signal condition information, the TA validation condition comprises that the wireless signal strength of the target access point detected by the terminal is within a target signal strength range, and the target signal strength range is determined according to the preset signal condition information.

23. The method according to claim 21, wherein in a case where the first condition information comprises the preset position condition information, the preset position condition information comprises at least one first candidate cell; and the TA validation condition comprises that a serving cell of the terminal is comprised in the at least one first candidate cell.

24. The method according to claim 21, wherein in a case where the first condition information comprises the preset position condition information, the preset position condition information comprises at least one second candidate cell and a first distance parameter corresponding to each second candidate cell; and the TA validation condition comprises that a first distance between the terminal and an antenna corresponding to the second candidate cell is less than or equal to a first distance threshold, and the first distance threshold is determined according to the first distance parameter.

25. The method according to claim 21, wherein in a case where the first condition information comprises the preset position condition information, the preset position condition information comprises a preset position parameter and a second distance parameter; and the TA validation condition comprises that a second distance between the terminal and a preset position is less than or equal to a second distance threshold, the preset position is a geographical position determined according to the preset position parameter, and the second distance threshold is determined according to the second distance parameter.

26. The method according to claim 21, wherein in a case where the first condition information comprises the preset time condition information, the preset time condition information comprises a preset time parameter; the TA validation condition comprises that a current time of the terminal is within a first time range; and the first time range is determined according to the preset time parameter.

27. The method according to claim 19, wherein the access point TA parameter comprises an access point TA length or an access point timing advance group (TAG) identifier.

28. The method according to any one of claims 18 to 27, further comprising:
determining an uplink channel resource parameter; and
sending a second message to the terminal according to the uplink channel resource parameter, wherein the second message comprises the uplink channel resource parameter; the uplink channel resource parameter is configured to instruct the terminal to perform uplink transmission according to the uplink channel resource parameter after the target TA for accessing the target access point is determined according to the first parameter.

29. An access apparatus, applied to a terminal, comprising:
a first determining module, configured to determine a first parameter corresponding to at least one candidate access point; wherein the at least one candidate access point comprises a target access point, and an access point is a cell and/or a beam;
a second determining module, configured to determine a target timing advance (TA) for accessing the target access point according to the first parameter; and
an accessing module, configured to access the target access point according to the target TA.

30. An access apparatus, applied to a network device, comprising:
a third determining module, configured to determine a first parameter corresponding to at least one candidate access point; wherein the at least one candidate access point comprises a target access point; and
a first sending module, configured to send a first message to a terminal according to the first parameter; wherein the first message comprises the first parameter; the first parameter is configured to instruct the terminal to determine a target timing advance (TA) for accessing the target access point in a case where the terminal is to access the target access point, and access the target access point according to the target TA; wherein an access point is a cell and/or a beam.

31. An access apparatus, comprising:
a processor; and
a memory, for storing instructions executable by the processor,
wherein the processor is configured to perform the steps of the method according to any one of claims 1 to 17 or perform the steps of the method according to any one of claims 18 to 28.

32. A computer-readable storage medium, having stored therein instructions that, when executed by a processor, cause the steps of the method according to any one of claims 1 to 17 or the steps of the method according to any one of claims 18 to 28 to be performed.

33. A chip, comprising a processor and an interface; wherein the processor is configured to read instructions to perform the steps of the method according to any one of claims 1 to 17 or perform the steps of the method according to any one of claims 18 to 28.
